(19) Europäisches Patentamt
European Patent Office
Office européen des brevets

(11) EP 1 543 049 B1

(12) **EUROPEAN PATENT SPECIFICATION**

(45) Date of publication and mention of the grant of the patent:
**11.02.2009 Bulletin 2009/07**

(21) Application number: **03749666.8**

(22) Date of filing: **12.09.2003**

(51) Int Cl.:
*C08F 210/06* (2006.01) *C08F 4/642* (2006.01)

(86) International application number:
**PCT/US2003/028873**

(87) International publication number:
**WO 2004/026925 (01.04.2004 Gazette 2004/14)**

(54) **IMPROVED PROCESS FOR MANUFACTURE OF POLYMERS**

VERBESSERTES VERFAHREN ZUR HERSTELLUNG VON POLYMEREN

PROCEDE AMELIORE DE PRODUCTION DE POLYMERES

(84) Designated Contracting States:
**DE NL**

(30) Priority: **17.09.2002 US 411778 P**

(43) Date of publication of application:
**22.06.2005 Bulletin 2005/25**

(73) Proprietor: **DOW GLOBAL TECHNOLOGIES INC.**
**Midland MI 48674 (US)**

(72) Inventors:
- **ARRIOLA, Daniel, J.**
  **Midland, MI 48642 (US)**
- **BOKOTA, Marilyn**
  **Beaverton, MI 48612 (US)**
- **TIMMERS, Francis, J.**
  **Midland, MI 48642 (US)**

(74) Representative: **Burford, Anthony Frederick et al**
**Beck Greener**
**Fulwood House**
**12 Fulwood Place**
**London WC1V 6HR (GB)**

(56) References cited:
**WO-A-02/38628**
**WO-A-03/040195**
**WO-A-03/040201**
**WO-A-03/040202**
**US-A- 6 103 657**

- **DATABASE CA [Online] CHEMICAL ABSTRACTS SERVICE, COLUMBUS, OHIO, US; SUGIMURA, KENJI ET AL: "Olefin polymerization catalysts for producing polyolefins with narrow molecular weight distribution" retrieved from STN Database accession no. 134:116329 XP002267944 & JP 2001 011111 A (MITSUI CHEMICAL INDUSTRY CO., LTD., JAPAN) 16 January 2001 (2001-01-16)**

EP 1 543 049 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for preparing olefin interpolymers having improved efficiency and capable of preparing polymers having increased molecular weights. The resulting interpolymers, including polypropylene, are well known commercially and may be usefully employed in the preparation of solid articles such as moldings, films, sheets and foamed objects by molding, extruding or other processes.

The manufacture of olefin interpolymers by use of catalysts comprising Group 4 metal amide complexes and halide or alkyl metal derivatives thereof has been previously taught in US-A-5,312,938, US-A-5,597,935, US-A-5,861,352, US-A-5,880,302, US-A-6,020,444, and US-A-6,232,256, and elsewhere. In US-A-6,320,005 and US-A-6,103,657 certain transition metal amine donor complexes for use as components of olefin polymerization catalysts were disclosed. In WO-A-02/38628 additional description of such Group 4 metal complexes containing "spectator ligands" such as amino-substituted cyclic amine compounds were disclosed.

JP-A-2001011111 discloses olefin polymerization catalysts containing a transition metal compound of formula I

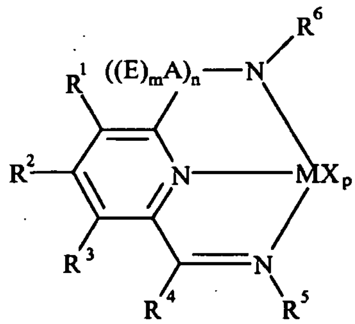

(A)

wherein

A is an atom of Groups 13-16 of the periodic table;
E is a substituent containing for example carbon, oxygen, or nitrogen;
M is a transition metal of Groups 3-10 of the periodic table;
$R^1$ to $R^6$ are independently H or, for example, halogen, hydrocarbyl, halogenated hydrocarbyl, organic silyl, acyl, or sulphonyl;
X is for example hydrogen, a halogen, a $C_{1-20}$ hydrocarbyl, or halogenated hydrocarbyl and two or more X groups may be bonded together to form a ring
n is 1 or 2;
m is 0-2; and
p is valence of M;

According to the present invention there is now provided a process for preparing a polymer comprising contacting one or more $C_{3-8}$ olefin monomers with a catalyst composition comprising a Group 4 metal complex of a polyvalent, Lewis base ligand under addition polymerization conditions in the presence of ethylene in an amount of from 0.1 to 10 weight percent ethylene based on total monomer weight sufficient to improve the molecular weight of the resulting interpolymer or to improve the efficiency of the polymerization process, and preferably to obtain both objectives, but not in an amount that substantially alters the tacticity of the resulting $C_{3-8}$ interpolymer. In particular, it has been discovered that if a minor proportion of ethylene is present in such polymerizations, the resulting polymers possess substantially the same properties as a polymer in which no polymerized ethylene is present, but the same can be prepared having much improved molecular weights. Moreover, the process for preparing such interpolymers is more efficient, compared to processes in which ethylene is absent. Thus, according to one aspect of the invention, it is desired to utilize ethylene not for the preparation of elastomeric or amorphous copolymers, but rather in order to improve the molecular weight of the polymer and/or the catalytic efficiency of the polymerization process.

All references to the Periodic Table of the Elements herein shall refer to the Periodic Table of the Elements, published and copyrighted by CRC Press, Inc., 1999. Also, any references to a Group or Groups shall be to the Groups or Groups reflected in this Periodic Table of the Elements using the IUPAC system for numbering groups. The term "comprising" when used herein with respect to a composition, mixture or process is not intended to exclude the additional presence of any other compound, component or step.

By the term "interpolymer" herein is meant any form of polymer, including graft or block polymers, that includes

in polymerized form two or more monomers. By the term "random distribution" (or "randomly distributed") as used herein, is meant that the ethylene functionality resulting from polymerization of the ethylene monomer is distributed within each polymer chain in a random or nearly random, for example, non-block, manner (intrachain distribution). By the term "uniformlydistributed" is meant that the foregoing ethylene functionality is equally or nearly equally distributed among different polymer chains (that is, homogeneous interchain distribution).

Quantification of ethylene content in the interpolymers of the invention may be achieved by the use of any suitable analytical technique, including $^{13}C$ NMR-, and IR- spectroscopic analysis of the interpolymer. Interchain distribution within the interpolymers may be measured by a polymer fractionation technique, followed by analysis of the various polymer fractions, using one of the foregoing techniques. Examples of suitable fractionation techniques include Temperature Rising Elution Fractionation (TREF), Analytical Temperature Rising Elution Fractionation (ATREF) or high pressure liquid chromatography (HPLC).

TREF analysis is a well known method of fractionation that has been published in the open literature over the past 15 years. ATREF is a similar technique for fractional analysis of olefin polymers capable of fractionating semi-crystalline polymers as a function of crystallization temperature while simultaneously estimating the molecular weight of the fractions. It has been described in US-A-4,798,081, as well as in "Determination of Short-Chain Branching Distributions of Ethylene copolymers by Automated Analytical Temperature Rising Elution Fractionation" (Auto-ATREF), J. of Appl Pol Sci: Applied Polymer Symposium 45, 25-37 (1990). The primary difference between ATREF and TREF is that the ATREF technique is done on a small scale and fractions are not actually isolated. Instead, a typical liquid chromatographic (LC) mass detector, such as an infrared single frequency detector, is used to quantify the crystallinity distribution of a polymer as a function of elution temperature. This distribution can then be transformed to any number of alternative domains such as comonomer distribution. This transformed distribution can then be interpreted according to a structural variable like comonomer content.

To obtain ATREF data, a commercially available viscometer especially adapted for LC analysis, such as a Viskotek™ is coupled with the IR mass detector. Together these two LC detectors can be used to calculate the intrinsic viscosity of the ATREF eluant. The viscosity average molecular weight of a given fraction can then be estimated using appropriate Mark Houwink constants, the corresponding intrinsic viscosity, and suitable coefficients to estimate the fractions concentration (dl/g) as it passes through the detectors. Thus, a typical ATREF report will provide the weight fraction polymer and viscosity average molecular weight as a function of elution temperature.

The molecular weight partitioning factor, $M_{pf}$, characterizes the ratio of the average molecular weight of the fractions with high ethylene comonomer content to the average molecular weight of the fractions with low ethylene comonomer content. Higher and lower ethylene contents polymers are defined as being below or above the median elution temperature of the TREF concentration plot respectively. That is, the TREF data is divided into two parts of equal weight. $M_{pf}$ is calculated from the following equation:

$$M_{pf} = \frac{\dfrac{\sum_{i=1}^{n} w_i \cdot M_i}{\sum_{i=1}^{n} w_i}}{\dfrac{\sum_{j=1}^{m} w_j \cdot M_j}{\sum_{j=1}^{m} w_j}},$$

where: Mi is the viscosity average molecular weight and wi is the normalized weight fraction as determined by ATREF for the n data points in the fractions below the median elution temperature. Mj is the viscosity average molecular weight and $w_j$ is the normalized weight fraction as determined by ATREF for the m data points in the fractions above the median elution temperature. Only those weight fractions, wi or $w_j$, which have associated viscosity average molecular weights greater than zero are used to calculate $M_{pf}$. For a valid calculation, it is required that n and m are greater than or equal to 3.

Randomness, or the distribution of monomer functionality within a chain, can be calculated based on the various reactivity ratios for the catalyst with respect to the various comonomers. For a polymerization of two monomers, as a most useful example, the reactivity ratios, r, for each monomer may be calculated based on two indices, i and j, where $k_{ij}$ is the rate constant for the most recently incorporated monomer i, with incoming monomer i or j during catalysis, with the reactivity ratio defined according to the formula: $r_{ij}=k_{ii}/k_{ij}$. Thus, for two monomers, identified as 1 and 2, respectively, $r_{12}=k_{11}/k_{12}$ and $r_{21}=k_{22}/k_{21}$. A random distribution of monomers throughout the copolymer chain is achieved when $r_{12}*r_{21}$ is approximately equal to 1. Preferred interpolymers of the invention are those wherein the ethylene randomness meets the requirement of: $0.1< r_{12}*r_{21} < 10.0$, more preferably $0.5 < r_{12}*r_{21} < 2$, most preferably $0.75< r_{12}*r_{21} < 1.5$. Highly

preferably, all comonomers are uniformly and randomly distributed within the polymer chains, or are nearly uniformly and randomly distributed. For a highly uniform polymer, the intrachain distribution or homogeneity of the polymer can also be determined using $^{13}C$ NMR spectroscopy, according to known techniques.

As used herein the term "long chain branching" refers to pendant oligomeric, hydrocarbyl-, groups attached to the polymeric chain, which groups have a length greater than m-2 carbons, wherein m is the number of carbons in the largest α-olefin of the ethylene/ $C_{3-8}$ olefin mixture. Long chain branching generally is thought to result from the reincorporation of addition polymerizable compounds generated as a result of β-hydride elimination, or other vinyl group generating process. Generally, the present invention does not result in the generation of substantial quantities of long chain branches.

Several techniques for measuring the extent of long chain branching in a copolymer already exist. Principle analytical techniques include those based on $^{13}C$ NMR analysis, optionally coupled with low angle laser light scattering or similar particle size measuring technique. Additionally, it is possible to arrive at an estimate of short chain branches, that is, branches due to the $C_{3-8}$ comonomer remnant, by preparation of a control copolymer using a labeled monomer, such as $^{13}C$ enriched 1-octene or ethylene, under the assumption that a similar level of branch distribution will exist in copolymers made under comparative conditions utilizing unmodified monomers. The level of long chain branching is thereafter determined by subtraction. Preferred polymers according to the present invention contain less than 0.3 long chain branches per 10,000 carbons, preferably less than 0.1 long chain branches per 10,000 carbons.

Most preferred olefin mixtures for use herein are mixtures of ethylene and propylene, containing from 0.5 to 5.0, most preferably from 0.5 to 1.0, weight percent ethylene. Uniquely, according to the present invention, it is believed, without wishing to be bound by such belief, that the ethylene in the monomer mixture does not operate as a chain transfer agent during the polymerization, thereby terminating the polymerization and reducing the molecular weight of the resulting polymers, as often occurs using other catalyst systems. Furthermore, it is believed that ethylene causes the rate of other chain transfer events to decrease, thereby resulting in production of higher molecular weight polymers compared to polymers formed in the absence of ethylene. Thus, the preparation of higher molecular weight polymers in a high efficiency process by adding a small quantity of ethylene to a polymerization mixture comprising one or more $C_{3-8}$ olefins, especially propylene, is unexpected and contrary to the normal results achieved with catalyst compositions based on Group 4 metal complexes containing delocalized π-bonded ligand groups, especially metallocenes.

Examples of suitable metal complexes of polyvalent ligands for use in the present invention include Group 4 metal derivatives, especially hafnium derivatives of hydrocarbylamine substituted heteroaryl compounds of the formula $R^1HN\text{-}T\text{-}R^2$ (I), said complexes corresponding to the formula:

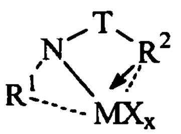

(IA)

wherein

R¹ is selected from alkyl, cycloalkyl, heteroalkyl, cycloheteroalkyl, aryl, and inertly substituted derivatives thereof containing from 1 to 30 atoms not counting hydrogen;
T is a divalent bridging group of from 1 to 20 atoms other than hydrogen, preferably a mono- or di- $C_{1-20}$ hydrocarbyl substituted methylene or silane group, and
$R^2$ is a $C_{6-20}$ heteroaryl group containing Lewis base functionality, especially a pyridin-2-yl- or substituted pyridin-2-yl group,
and in the metal complex, M is the Group 4 metal, preferably hafnium,
X is an anionic, neutral or dianionic ligand group,
x is a number from 0 to 5 indicating the number of such X groups, and
bonds, optional bonds and electron donative interactions are represented by lines, dotted lines and arrows respectively.

Preferred complexes are those wherein ligand formation results from hydrogen elimination from the amine group and optionally from the loss of one or more additional groups, especially from $R^2$. In addition, electron donation from the Lewis base functionality, preferably an electron pair, provides additional stability to the metal center. Preferred examples of the foregoing polyfunctional Lewis base compounds and the resulting metal complexes correspond to the formulas:

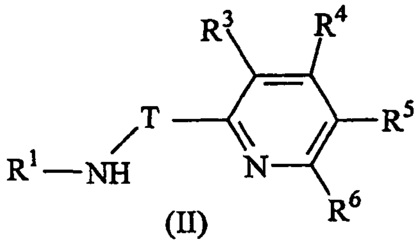
(II)

(IIA)
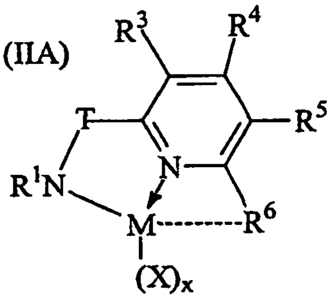
,

wherein

M, X, x, $R^1$ and T are as previously defined,
$R^3$, $R^4$, $R^5$ and $R^6$ are hydrogen, halo, or an alkyl, cycloalkyl, heteroalkyl, heterocycloalkyl, aryl, or silyl group of up to 20 atoms not counting hydrogen, or adjacent $R^3$, $R^4$, $R^5$ or $R^6$ groups may be joined together thereby forming fused ring derivatives, and
bonds, optional bonds and electron pair donative interactions are represented by lines, dotted lines and arrows respectively.

More preferred examples of the foregoing difunctional Lewis base compounds and metal complexes correspond to the formula:

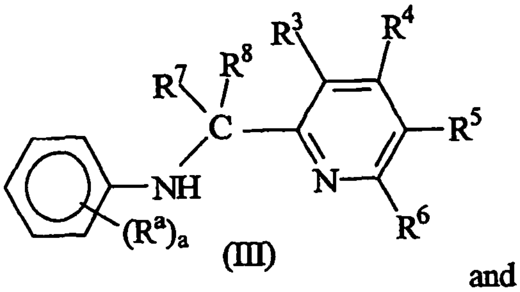
(III)

and

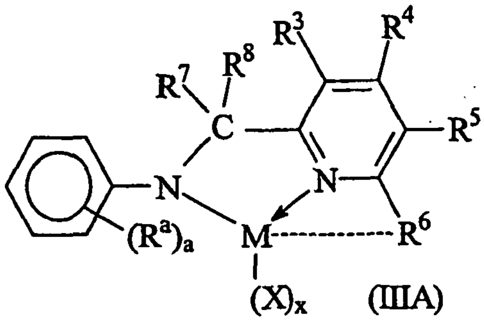
(IIIA)
,

wherein

M, X, x, $R^1$ and T are as previously defined,
$R^3$, $R^4$, $R^5$ and $R^6$ are as previously defined, preferably $R^3$, $R^4$, and $R^5$ are hydrogen, or $C_{1-4}$ alkyl, and $R^6$ is $C_{6-20}$ aryl, most preferably naphthalenyl;
$R^8$ independently each occurrence is $C_{1-4}$ alkyl, and a is 1-5, most preferably $R^a$ in two ortho- positions is isopropyl or t-butyl;
$R^7$ and $R^8$ independently each occurrence are hydrogen or a $C_{1-20}$ alkyl or aryl group, most preferably one of $R^7$ and $R^8$ is hydrogen and the other is a $C_{6-20}$ aryl group, especially a fused polycyclic aryl group, most preferably an anthracenyl group, and
bonds, optional bonds and electron pair donative interactions are represented by lines, dotted lines and arrows respectively.

Highly preferred polyfunctional Lewis base compounds and metal complexes for use herein correspond to the formula:

(IV)

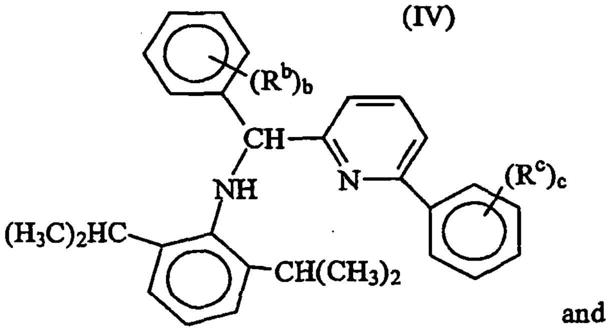

and

(IVA)

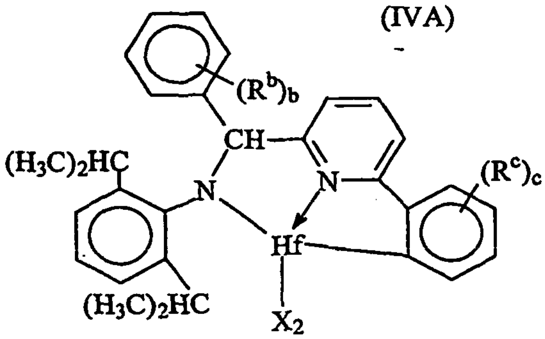

,

wherein X each occurrence is halide, N,N-dimethylamido, or $C_{1-4}$ alkyl, and preferably each occurrence X is methyl;

$R^b$ independently each occurrence is $C_{1-20}$ alkyl or aryl, or two adjacent $R^b$ groups are joined together thereby forming a ring, and b is 1-5; and

$R^c$ independently each occurrence is $C_{1-20}$ alkyl or aryl, or two adjacent $R^c$ groups are joined together thereby forming a ring, and c is 1-5.

Most highly preferred examples of metal complexes for use according to the present invention are complexes of the following formulas:

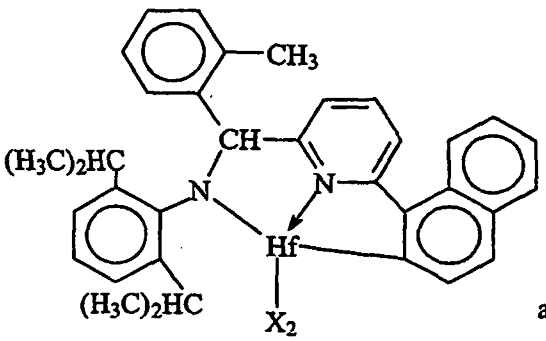

and

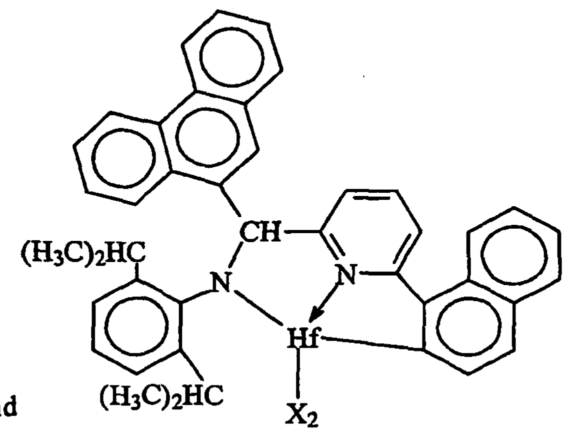

wherein X each occurrence is halide, N,N-dimethylamido, or $C_{1-4}$ alkyl, and preferably each occurrence X is methyl.

Examples of metal complexes usefully employed according to the present invention include:

[N-(2,6-di(1-methylethyl)phenyl)amido)(o-tolyl)(α-naphthalen-2-diyl(6-pyridin-2-diyl)methane)]hafnium dimethyl;
[N-(2,6-di(1-methylethyl)phenyl)amido)(o-tolyl)(α-naphthalen-2-diyl(6-pyridin-2-diyl)methane)]hafnium di(N,N-dimethylamido);
[N-(2,6-di(1-methylethyl)phenyl)amido)(o-tolyl)(α-naphthalen-2-diyl(6-pyridin-2-diyl)methane)]hafnium dichloride;
[N-(2,6-di(1-methylethyl)phenyl)amido)(phenanthren-5-yl)(α-naphthalen-2-diyl(6-pyridin-2-diyl)methane)]hafnium dimethyl;
[N-(2,6-di(1-methylethyl)phenyl)amido)((henanthren-5-yl)(α-naphthalen-2-diyl(6-pyridin-2-diyl)methane)]hafnium di(N,N-dimethylamido); and
[N-(2,6-di(1-methylethyl)phenyl)amido)(phenanthren 5-yl)(α-naphthalen-2-diyl(6-pyridin-2-diyl)methane)]hafnium dichloride.

Under the reaction conditions of the present invention, it has been discovered that the hydrogen of the 2-position of the α-naphthalene group substituted at the 6-position of the pyridin-2-yl group is subject to elimination, thereby uniquely forming metal complexes wherein the metal is covalently bonded to both the resulting amide group and to the 2-position of the α-naphthalenyl group, as well as stabilized by coordination to the pyridinyl nitrogen atom through the electron pair of the nitrogen atom.

The foregoing metal complexes are conveniently prepared by standard metallation and ligand exchange procedures involving a source of the Group 4 metal and the neutral polyfunctional ligand source. The complexes may also be prepared by means of an amide elimination and hydrocarbylation process starting from the corresponding Group 4 metal tetraamide and a hydrocarbylating agent, such as trimethylaluminum, as disclosed in WO 02/38628. Other techniques may be used as well.

The resulting Group 4 metal complexes are activated to form the actual catalyst composition by combination with a cocatalyst, preferably an aluminoxane, a cation forming cocatalyst, or a combination thereof. The mixture of monomers may be contacted with the active catalyst composition according to any suitable polymerization conditions. Also, the quantity of ethylene during the polymerization may be varied or even eliminated, provided that during some portion of the polymerization a mixture comprising ethylene and one or more $C_{3-8}$ olefins is present. The process is characterized by use of temperatures typically from 25 to 50°C and pressures from atmospheric to 10 MPa. Hydrogen may be employed as a chain transfer agent for molecular weight control according to known techniques if desired. Of course, if the objective of attaining polymers having increased molecular weight is desired, no chain transfer agent is employed.

Suitable alumoxanes for use herein include polymeric or oligomeric alumoxanes, especially methylalumoxane, triisobutyl aluminum modified methylalumoxane, or isobutylalumoxane; neutral Lewis acid modified polymeric or oligomeric alumoxanes, such as the foregoing alkylalumoxanes modified by addition of a $C_{1-30}$ hydrocarbyl substituted Group 13 compound, especially a tri(hydrocarbyl)aluminum- or tri(hydrocarbyl)boron compound, or a halogenated (including perhalogenated) derivative thereof, having from 1 to 10 carbons in each hydrocarbyl or halogenated hydrocarbyl group, more especially a perfluorinated tri(aryl)boron compound or a perfluorinated tri(aryl)aluminum compound.

The Group 4 metal complexes may also be rendered catalytically active by combination with a cation forming cocatalyst, such as those previously known in the art for use with Group 4 metal olefin polymerization complexes. Suitable cation forming cocatalysts for use herein include neutral Lewis acids, such as $C_{1-30}$ hydrocarbyl substituted Group 13 compounds, especially tri(hydrocarbyl)aluminum- or tri(hydrocarbyl)boron compounds and halogenated (including perhalogenated) derivatives thereof, having from 1 to 10 carbons in each hydrocarbyl or halogenated hydrocarbyl group, more especially perfluorinated tri(aryl)boron compounds, and most especially tris(pentafluoro-phenyl)borane; nonpolymeric, compatible, noncoordinating, ion forming compounds (including the use of such compounds under oxidizing conditions), especially the use of ammonium-, phosphonium-, oxonium-, carbonium-, silylium- or sulfonium- salts of compatible, noncoordinating anions, or ferrocenium-, lead- or silver salts of compatible, noncoordinating anions; and combinations of the foregoing cation forming cocatalysts and techniques. The foregoing activating cocatalysts and activating techniques have been previously taught with respect to different metal complexes for olefin polymerizations in the following references: EP-A-277,003, US-A-5,153,157, US-A-5,064,802, US-A-5,321,106, US-A-5,721,185, US-A-5,350,723, US-A-5,425,872, US-A-5,625,087, US-A-5,883,204, US-A-5,919,983, US-A-5,783,512, WO 99/15534, and WO99/42467.

As in other similar polymerizations, it is highly desirable that the monomers and solvents employed be of sufficiently high purity that catalyst deactivation does not occur. Any suitable technique for monomer purification such as devolatilization at reduced pressures, contacting with molecular sieves or high surface area alumina, or a combination of the foregoing processes may be employed.

Purification of the resulting polymer to remove entrained catalyst and cocatalyst may also be desired by the practitioner. Such contaminants may generally be identified by residues of ash on pyrolysis of the polymer that are attributable to catalyst or cocatalyst metal values. A suitable technique for removing such compounds is by solvent extraction, for example, extraction utilizing hot, high boiling chlorinated solvents, acids or bases such as caustic followed by filtration.

A support may be optionally present in the catalyst formulation especially in a gas phase or slurry polymerization. Suitable supports include any inert, particulate material, but most suitably is a metal oxide, preferably alumina, silica, or an aluminosilicate material. Suitable particle sizes are from 1 to 1000 $\mu$m, preferably from 10 to 100 $\mu$m. Most desired supports are calcined silica, which may be treated to reduce surface hydroxyl groups by reaction with a silane, or similar reactive compound. Any suitable means for including such support in the catalyst formulation may be used, such as by dispersing the components in a liquid and contacting the same with the support and thereafter drying, by spraying, or coating the support with such liquid and thereafter removing the liquid, or by coprecipitating the cocatalyst and a support material from a liquid medium.

The polymerization is desirably carried out as a continuous polymerization, in which catalyst components, monomers, and optionally solvent, adjuvants, scavengers, and polymerization aids are continuously supplied to the reaction zone and polymer product continuously removed therefrom. Within the scope of the terms "continuous" and "continuously" as used in this context are those processes in which there are intermittent additions of reactants and removal of products at small regular intervals, so that, over time, the overall process is approximately continuous.

In one mode of operation, the polymerization is conducted in a continuous solution polymerization system, including such a system comprising one or more polymerization reactors. In another mode of operation two reactors

connected in series or parallel are employed. In one reactor a relatively high molecular weight product (Mw from 200,000 to 600,000, more preferably 300,000 to 500,000) is formed while in the second reactor a product of a relatively low molecular weight (Mw 50,000 to 2300,000) is formed. The final product is a blend of the two reactor effluents which are combined prior to devolatilization to result in a uniform blend of the two polymer products. Such a dual reactor process allows for the preparation of products having improved properties. In a preferred mode of operation the reactors are connected in series, that is effluent from the first reactor is charged to the second reactor and fresh monomer, solvent and hydrogen is added to the second reactor. Reactor conditions are adjusted such that the weight ratio of polymer produced in the first reactor to that produced in the second reactor is from 20:80 to 80:20. In addition the temperature of the second reactor is controlled to produce the lower molecular weight product.

The polymerization process of the present invention can also be employed to advantage in a gas phase copolymerization process. Such processes are used commercially on a large scale for the manufacture of polypropylene and ethylene/propylene copolymers. The gas phase process employed can be, for example, of the type which employs a mechanically stirred bed or a gas fluidized bed as the polymerization reaction zone. Preferred is the process wherein the polymerization reaction is carried out in a vertical cylindrical polymerization reactor containing a fluidized bed of polymer particles supported or suspended above a perforated plate, the fluidization grid, by a flow of fluidization gas.

The gas employed to fluidize the bed comprises the monomer or monomers to be polymerized, and also serves as a heat exchange medium to remove the heat of reaction from the bed. The hot gases emerge from the top of the reactor, normally via a tranquilization zone, also known as a velocity reduction zone, having a wider diameter than the fluidized bed and wherein fine particles entrained in the gas stream have an opportunity to gravitate back into the bed. It can also be advantageous to use a cyclone to remove ultra-fine particles from the hot gas stream. The gas is then normally recycled to the bed by means of a blower or compressor and one or more heat exchangers to strip the gas of the heat of polymerization.

A preferred method of cooling of the bed, in addition to the cooling provided by the cooled recycle gas, is to feed a volatile liquid to the bed to provide an evaporative cooling effect, often referred to as operation in the condensing mode. The volatile liquid employed in this case can be, for example, a volatile inert liquid, for example, a saturated hydrocarbon having 3 to 8, preferably 4 to 6, carbon atoms. In the case that the monomer or comonomer itself is a volatile liquid, or can be condensed to provide such a liquid, this can suitably be fed to the bed to provide an evaporative cooling effect. The volatile liquid evaporates in the hot fluidized bed to form gas which mixes with the fluidizing gas. If the volatile liquid is a monomer or comonomer, it will undergo some polymerization in the bed. The evaporated liquid then emerges from the reactor as part of the hot recycle gas, and enters the compression/heat exchange part of the recycle loop. The recycle gas is cooled in the heat exchanger and, if the temperature to which the gas is cooled is below the dew point, liquid will precipitate from the gas. This liquid is desirably recycled continuously to the fluidized bed. It is possible to recycle the precipitated liquid to the bed as liquid droplets carried in the recycle gas stream. This type of process is described, for example in EP-A-089691; US-A-4,543,399; WO-A-94/25495 and USA-5,352,749. A particularly preferred method of recycling the liquid to the bed is to separate the liquid from the recycle gas stream and to reinject this liquid directly into the bed, preferably using a method which generates fine droplets of the liquid within the bed. This type of process is described in WO-A-94/28032.

The polymerization reaction occurring in the gas fluidized bed is catalyzed by the continuous or semi-continuous addition of catalyst. Such catalyst can be supported on an inorganic or organic support material as described above. The catalyst can also be subjected to a prepolymerization step, for example, by polymerizing a small quantity of olefin monomer in a liquid inert diluent, to provide a catalyst composite comprising catalyst particles embedded in olefin polymer particles.

The polymer is produced directly in the fluidized bed by catalyzed copolymerization of the monomer and one or more comonomers on the fluidized particles of catalyst, supported catalyst or prepolymer within the bed. Start-up of the polymerization reaction is achieved using a bed of preformed polymer particles, which are preferably similar to the target polyolefin, and conditioning the bed by drying with inert gas or nitrogen prior to introducing the catalyst, the monomers and any other gases which it is desired to have in the recycle gas stream, such as a diluent gas, hydrogen chain transfer agent, or an inert condensable gas when operating in gas phase condensing mode. The produced polymer is discharged continuously or discontinuously from the fluidized bed as desired.

The gas phase processes most suitable for the practice of this invention are continuous processes which provide for the continuous supply of reactants to the reaction zone of the reactor and the removal of products from the reaction zone of the reactor, thereby providing a steady-state environment on the macro scale in the reaction zone of the reactor. Products are readily recovered by exposure to reduced pressure and optionally elevated temperatures (devolatilization) according to known techniques. Typically, the fluidized bed of the gas phase process is operated at temperatures greater than 50°C, preferably from 60°C to 110°C, more preferably from 70°C to 110°C.

A number of patents and patent applications describe gas phase processes which are adaptable for use in the process of this invention, particularly, US-A-4,588,790; US-A-4,543,399; US-A-5,352,749; US-A-5,436,304; US-A-5,405,922; US-A-5,462,999; US-A-5,461,123; US-A-5,453,471; US-A-5,032,562; US-A-5,028,670; US-A-5,473,028;

US-A-5,106,804; US-A-5,556,238; US-A-5,541,270; US-A-5,608,019; US-A-5,616,661; and EP-A-0659773; EP-A-0692500; EP-A-0780404; EP-A-0697420; EP-A-0628343; EP-A-0593083; EP-A-0676421; EP-A-0683176; EP-A-0699212; EP-A-0699213; EP-A-0721798; EP-A-0728150; EP-A=0728151; EP-A-0728771; EP-A-0728772; EP-A-0735058; and PCT Applications WO-A-94/29032, WO-A-94/25497, WO-A-94/25495, WO-A-94/28032, WO-A-95/13305, WO-A-94/26793, WO-A-95/07942, WO-A-97/25355, WO-A-93/11171, WO-A-95/13305, and WO-A-95/13306.

The skilled artisan will appreciate that the invention disclosed herein may be practiced in the absence of any component which has not been specifically disclosed.

Unless stated to the contrary all parts and percentages are expressed on a weight basis. The term "overnight", if used, refers to a time of approximately 16-18 hours, the term "room temperature", refers to a temperature of 20-25 °C, and the term "mixed alkanes" refers to a mixture of $C_{6-9}$ aliphatic hydrocarbons available under the trade designation Isopar E®, from Exxon Chemicals Inc. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before use.

Examples

Example 1

Hafnium Complex Preparation

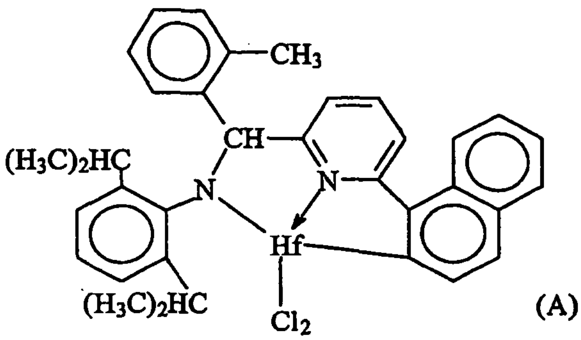
(A)

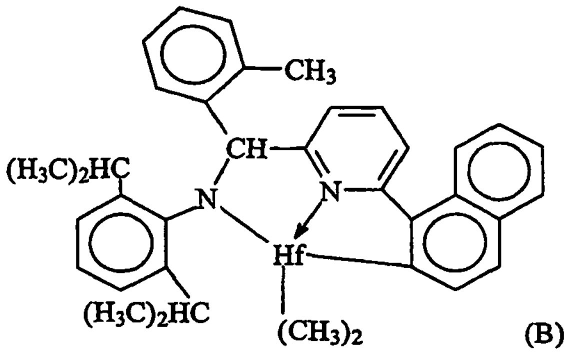
(B)

To a 50 mL flask equipped with a stirrer in a glovebox at room temperature was added 20 ml of toluene and 483 mg (1.00 mmol) of (2,6-di(1-methylethyl)phenylamino)(o-tolyl)((α-naphthalenyl(6-pyridin-2-diyl))methane. Two equivalents of isobutyllithium were added followed by one equivalent of hafnium tetrachloride. The product, [N-(2,6-di (1-methylethyl)phenylamido)(o-tolyl)((α-naphthalen-2-diyl(6-pyridin-2-diyl))methane)]hafnium dichloride (A) was recovered by filtration and subjected to drying under dynamic vacuum. The dimethyl derivative, [N-(2,6-di(1-methylethyl) phenyl)amido)(o-tolyl)(α-naphthalen-2-diyl(6-pyridin-2-diyl)methane)]hafnium dimethyl (B), was prepared by contacting a toluene solution of the dichloride complex with two equivalents of methyllithium, filtering, removing the volatiles and recrystalizing from hexane.

Polymerization

A 2 liter stirred, jacketed, polymerization reactor was charged with 400 g mixed alkanes solvent and 93 g propylene. Next, 1.5 μmole of catalyst (B) and 1.8 μmole cocatalyst (methyldi(octadecylammonium) tetrakis(pentafluorophenyl)borate) as 0.005 M solutions in toluene, along with isopropylaluminum modified methylalumoxane (PMAO-IP, available from Akzo, Inc., 45 μmol, based on Al, added as a scavenger) were premixed and added via a transfer line which was subsequently washed three times with 5 ml toluene. Hydrogen was added as a molecular weight control agent by differential pressure expansion from a 75 ml addition tank at 25 psi (345 kPa). In run 1, ethylene (5.3 g) was added. The reactor was heated to the polymerization temperature of 100 °C. After 21 minutes polymerization time, the resulting polymer solution was removed from the reactor into a nitrogen purged collection vessel containing 100 ml of isopropyl alcohol and 20 ml of a toluene solution containing 6.7 mg hindered phenol antioxidant (Irganox™ 1010 available from Ciba Geigy Co.) and 13.4 mg of phosphorus stabilizer (Irgafos™ 168, available from Ciba Geigy Co.). The polymer

solution was then dried in a vacuum oven under gradually increasing temperature and gradually decreasing pressure. The polymer was held at a final temperature of 140° C and a final pressure of 100 torr (13 kPa). Total drying time was 20 hours. Results are contained in Table 1.

Table 1

| run | yield (g) | efficiency (g/μg Hf) | Mp | Mw | Mn | Mw/Mn |
|---|---|---|---|---|---|---|
| 1 | 63.4 | 0.237 | 136.7 | 639,000 | 198,000 | 3.2 |
| 2* | 35.6 | 0.133 | 147.1 | 387,000 | 130,000 | 3.0 |
| * comparative not an example of the invention | | | | | | |

**Claims**

1. A process for preparing a polymer comprising contacting one or more $C_{3-8}$ olefin monomers with a catalyst composition comprising a Group 4 metal complex of a polyvalent, Lewis base ligand under addition polymerization conditions, **characterized in that** ethylene is present in an amount of from 0.1 to 10 weight percent based on total monomer weight insufficient to alter the tacticity of the polymer product but sufficient to increase the molecular weight of the polymer product and/or catalytic efficiency of the polymerization process.

2. The use, in the polymerization of one or more $C_{3-8}$ olefin monomers with a catalyst composition comprising a Group 4 metal complex of a polyvalent, Lewis base ligand under addition polymerization conditions, of ethylene, in an amount of from 0.1 to 10 weight percent based on total monomer weight insufficient to alter the tacticity of the polymer product, to increase the molecular weight of the polymer product and/or catalytic efficiency of the polymerization process.

3. A process according to Claim 1 or a use according to Claim 2, wherein propylene is polymerized in the presence of from 0.5 to 1.0 weight percent ethylene.

4. A process according to Claim 1 or a use according to Claim 2, wherein propylene is the only $C_{3-8}$ olefin monomer.

5. A process or use according to any one of the preceding claims, wherein the metal complex corresponds to the formula:

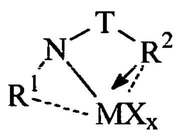 (IA)

wherein

$R^1$ is selected from alkyl, cycloalkyl, heteroalkyl, cycloheteroalkyl, aryl, and inertly substituted derivatives thereof containing from 1 to 30 atoms not counting hydrogen;
T is a divalent bridging group of from 1 to 20 atoms other than hydrogen,
$R^2$ is a $C_{6-20}$ heteroaryl group containing Lewis base functionality,
M is the Group 4 metal,
X is an anionic, neutral or dianionic ligand group,
x is a number from 0 to 5 indicating the number of such X groups, and
bonds, optional bonds and electron donative interactions are represented by lines, dotted lines and arrows respectively.

6. A process or use according to Claim 5, wherein:

T is a mono- or di- $C_{1-20}$ hydrocarbyl substituted methylene or silane group'
$R^2$ is a pyridin-2-yl- or substituted pyridin-2-yl group, and
M is hafnium.

7. A process or use according to Claim 5 or Claim 6, wherein the metal complex corresponds to the following Formula (IIA):

(IIA)
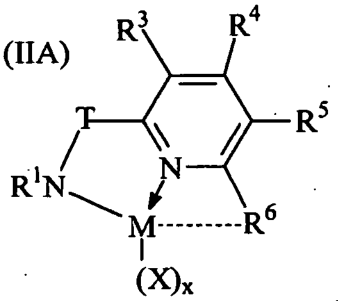
,

wherein $R^3$, $R^4$, $R^5$ and $R^6$ are hydrogen, halo, or an alkyl, cycloalkyl, heteroalkyl, heterocycloalkyl, aryl, or silyl group of up to 20 atoms not counting hydrogen, or adjacent $R^3$, $R^4$, $R^5$ or $R^6$ groups may be joined together thereby forming fused ring derivatives.

8. A process or use according to Claim 7, wherein the metal complex corresponds to the following Formula (IIIA):

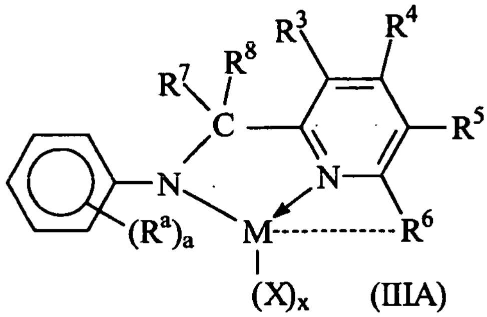
(IIIA) ,

wherein:

$R^a$ independently each occurrence is $C_{1-4}$ alkyl,
a is 1-5, and
$R^7$ and $R^8$ independently each occurrence are hydrogen or a $C_{1-20}$ alkyl or aryl group.

9. A process or use according to Claim 8, wherein:

$R^3$, $R^4$, and $R^5$ are hydrogen, or $C_{1-4}$ alkyl,
$R^6$ is $C_{6-20}$ aryl,
$R^a$ in two ortho- positions is isopropyl or t-butyl, and
one of $R^7$ and $R^8$ is hydrogen and the other is a $C_{6-20}$ aryl group.

10. A process or use according to Claim 9, wherein $R^6$ is naphthalenyl.

11. A process or use according to Claim 9, wherein the metal complex corresponds to the following Formula (IVA):

(IVA)

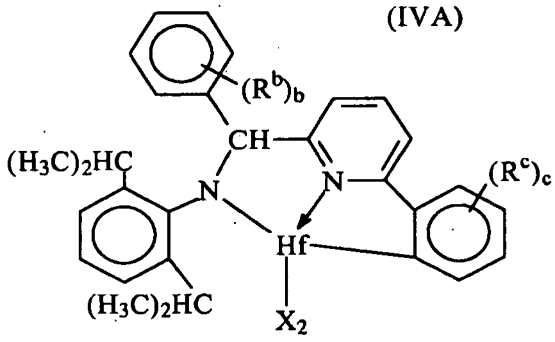

,

wherein:

X each occurrence is halide, N,N-dimethylamido, or $C_{1-4}$ alkyl,
$R^b$ independently each occurrence is $C_{1-20}$ alkyl or aryl, or two adjacent $R^b$ groups are joined together thereby forming a ring,
b is 1-5,
$R^c$ independently each occurrence is $C_{1-20}$ alkyl or aryl, or two adjacent $R^c$ groups are joined together thereby forming a ring, and
c is 1-5.

**12.** A process or use according to Claim 11, wherein the metal complex is selected from the group consisting of:

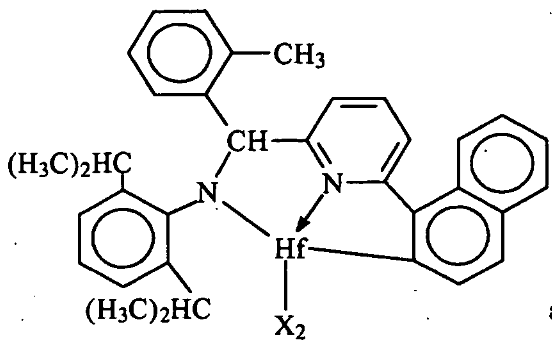

and

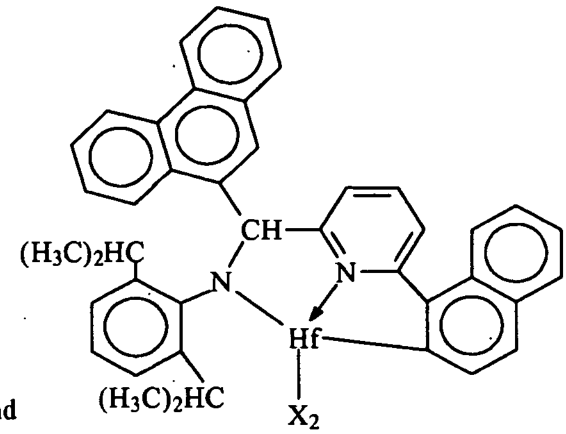

,

wherein X each occurrence is halide, N,N-dimethylamido, or $C_{1-4}$ alkyl.

**13.** A process or use according to Claim 11 or Claim 12, wherein X each occurrence is methyl.

## Patentansprüche

**1.** Verfahren zur Herstellung eines Polymers, bei dem ein oder mehr $C_{3-8}$-Olefinmonomere unter Additionspolymerisationsbedingungen mit einer Katalysatorzusammensetzung in Kontakt gebracht werden, die einen aus Gruppe 4 stammenden Metallkomplex eines mehrwertigen Lewis-Base-Liganden umfasst, **dadurch gekennzeichnet, dass** Ethylen in einer Menge von 0,1 bis 10 Gew.-% bezogen auf das Gesamtgewicht des Monomers vorliegt, was nicht ausreicht, um die Taktizität des Polymerprodukts zu ändern, aber ausreicht, um das Molekulargewicht des Polymerprodukts und/oder den katalytischen Wirkungsgrad des Polymerisationsverfahrens zu erhöhen.

**2.** Verwendung, bei der unter Additionspolymerisationsbedingungen stattfindenden Polymerisation von ein oder mehr

$C_{3-8}$-Olefinmonomeren mit einer Katalysatorzusammensetzung, die einen aus Gruppe 4 stammenden Metallkomplex eines mehrwertigen Lewis-Base-Liganden umfasst, von Ethylen in einer zur Änderung der Taktizität des Polymerprodukts nicht ausreichenden Menge von 0,1 bis 10 Gew.-% bezogen auf das Gesamtgewicht des Monomers, um das Molekulargewicht des Polymerprodukts und/oder den katalytischen Wirkungsgrad des Polymerisationsverfahrens zu erhöhen.

**3.** Verfahren nach Anspruch 1 oder Verwendung nach Anspruch 2, wobei Propylen in Gegenwart von 0,5 bis 1,0 Gew.-% Ethylen polymerisiert wird.

**4.** Verfahren nach Anspruch 1 oder Verwendung nach Anspruch 2, wobei Propylen das einzige $C_{3-8}$-Olefinmonomer ist.

**5.** Verfahren oder Verwendung nach einem der vorhergehenden Ansprüche, wobei der Metallkomplex der folgenden Formel entspricht:

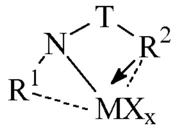

(IA)

worin

$R^1$ ausgewählt ist aus Alkyl, Cycloalkyl, Heteroalkyl, Cycloheteroalkyl, Aryl und inert substituierten Derivaten davon, die 1 bis 30 Atome ausgenommen Wasserstoff enthalten;
T eine zweiwertige Brückengruppe aus 1 bis 20 anderen Atomen als Wasserstoff ist;
$R^2$ eine $C_{6-20}$-Heteroarylgruppe ist, die eine Lewis-Base-Funktionalität enthält;
M das Metall der Gruppe 4 ist;
X eine anionische, neutrale oder dianionische Ligandengruppe ist;
x eine Zahl von 0 bis 5 ist, die die Zahl solcher X-Gruppen angibt; und
Bindungen, optionale Bindungen und Elektronen abgebende Wechselwirkungen jeweils durch Linien, punktierte Linien und Pfeile dargestellt sind.

**6.** Verfahren oder Verwendung nach Anspruch 5, wobei:

T eine mit $C_{1-20}$-Hydrocarbyl mono- oder disubstituierte Methylen- oder Silangruppe ist,
$R^2$ eine Pyridin-2-yl- oder substituierte Pyridin-2-yl-Gruppe ist, und
M Hafnium ist.

**7.** Verfahren oder Verwendung nach Anspruch 5 oder Anspruch 6, wobei der Metallkomplex der folgenden Formel (IIA) entspricht:

(IIA)

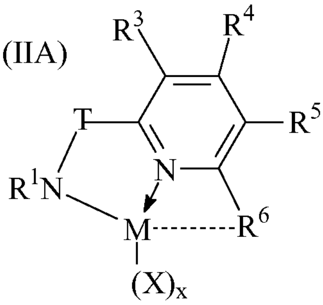

,

worin $R^3$, $R^4$, $R^5$ und $R^6$ Wasserstoff, Halogen oder eine Alkyl-, Cycloalkyl-, Heteroalkyl-, Heterocycloalkyl-, Aryl- oder Silylgruppe aus bis zu 20 Atomen ausgenommen Wasserstoff ist oder benachbarte $R^3$- , $R^4$-, $R^5$- oder $R^6$-Gruppen miteinander verbunden sein können, um **dadurch** kondensierte Ringderivate zu bilden.

**8.** Verfahren oder Verwendung nach Anspruch 7, wobei der Metallkomplex der folgenden Formel (IIIA) entspricht:

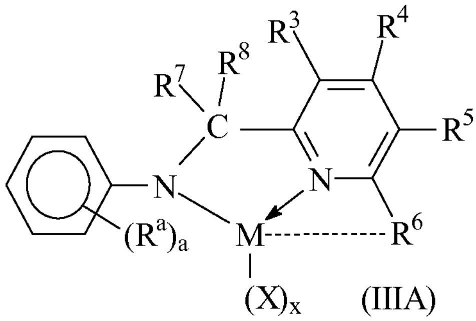

(IIIA) ,

worin:

$R^a$ bei jedem Vorkommen unabhängig $C_{1-4}$-Alkyl ist,
a 1-5 ist, und
$R^7$ und $R^8$ bei jedem Vorkommen unabhängig Wasserstoff oder eine $C_{1-20}$-Alkyl-oder -Arylgruppe sind.

**9.** Verfahren oder Verwendung nach Anspruch 8, wobei

$R^3$, $R^4$ und $R^5$ Wasserstoff oder $C_{1-4}$-Alkyl sind,
$R^6$ $C_{6-20}$-Aryl ist,
$R^a$ in zwei Orthostellungen Isopropyl oder t-Butyl ist, und
eines von $R^7$ und $R^8$ Wasserstoff ist und das andere eine $C_{6-20}$-Arylgruppe ist.

**10.** Verfahren oder Verwendung nach Anspruch 9, wobei $R^6$ Naphthalenyl ist.

**11.** Verfahren oder Verwendung nach Anspruch 9, wobei der Metallkomplex der folgenden Formel (IVA) entspricht:

(IVA)

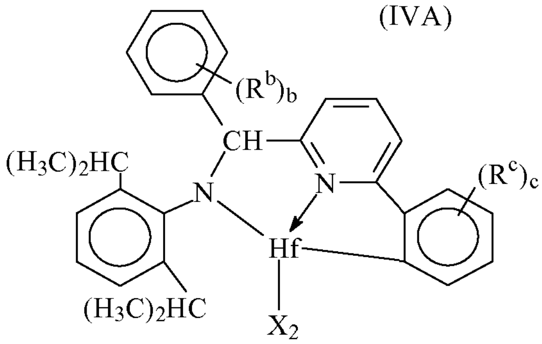

,

worin:

X bei jedem Vorkommen Halogenid, N,N-Dimethylamido oder $C_{1-4}$-Alkyl ist,
$R^b$ bei jedem Vorkommen unabhängig $C_{1-20}$-Alkyl oder -Aryl ist oder zwei benachbarte $R^b$-Gruppen miteinander verbunden sind, um **dadurch** einen Ring zu bilden,
b 1-5 ist,
$R^c$ bei jedem Vorkommen unabhängig $C_{1-20}$-Alkyl oder -Aryl ist oder zwei benachbarte $R^c$-Gruppen miteinander verbunden sind, um **dadurch** einen Ring zu bilden, und
c 1-5 ist.

**12.** Verfahren oder Verwendung nach Anspruch 11, wobei der Metallkomplex ausgewählt ist aus der aus Folgendem bestehenden Gruppe:

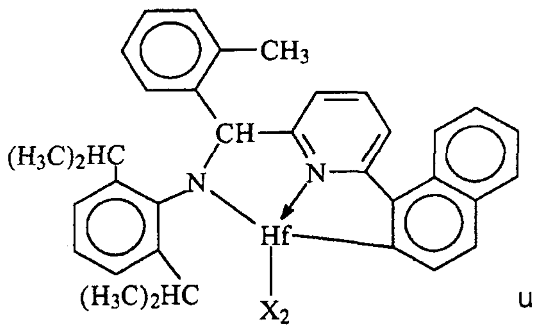 und 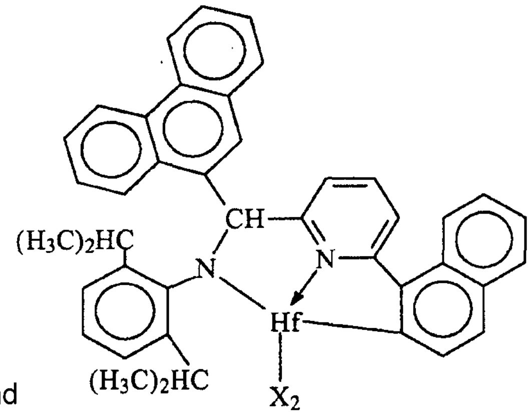 ,

worin X bei jedem Vorkommen Halogenid, N,N-Dimethylamido oder $C_{1-4}$-Alkyl ist.

**13.** Verfahren oder Verwendung nach Anspruch 11 oder Anspruch 12, wobei X bei jedem Vorkommen Methyl ist.

**Revendications**

**1.** Procédé de préparation d'un polymère, comportant le fait de mettre un ou plusieurs monomères, de type oléfine en $C_{3-8}$, en contact avec une composition de catalyseur qui comprend un complexe d'un métal du Groupe 4 et d'un ligand polyvalent de type base de Lewis, dans des conditions de polymérisation par addition, **caractérisé en ce qu'**il y a de l'éthylène qui est présent en une quantité représentant de 0,1 à 10 % du poids total de monomères, insuffisante pour altérer la tacticité du polymère produit, mais suffisante pour faire augmenter la masse moléculaire du polymère produit et/ou le rendement catalytique du procédé de polymérisation.

**2.** Emploi, dans la polymérisation d'un ou de plusieurs monomères de type oléfine en $C_{3-8}$, réalisée à l'aide d'une composition de catalyseur comprenant un complexe d'un métal du Groupe 4 et d'un ligand polyvalent de type base de Lewis et dans des conditions de polymérisation par addition, d'éthylène en une quantité représentant de 0,1 à 10 % du poids total de monomères, insuffisante pour altérer la tacticité du polymère produit, afin de faire augmenter la masse moléculaire du polymère produit et/ou le rendement catalytique du procédé de polymérisation.

**3.** Procédé conforme à la revendication 1, ou emploi conforme à la revendication 2, dans lequel on fait polymériser du propylène en présence de 0,5 à 1,0 % en poids d'éthylène.

**4.** Procédé conforme à la revendication 1, ou emploi conforme à la revendication 2, dans lequel il n'y a, en tant que monomère de type oléfine en $C_{3-8}$, que du propylène.

**5.** Procédé ou emploi conforme à l'une des revendications précédentes, dans lequel le complexe de métal est représenté par la formule :

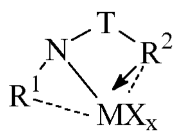 (IA)

dans laquelle

- $R^1$ représente une entité choisie parmi les groupes alkyle, cycloalkyle, hétéroalkyle, hétérocycloalkyle et aryle, comportant 1 à 30 atomes sans compter les atomes d'hydrogène, ainsi que leurs dérivés à substituants inertes ;
- T représente un groupe pontant divalent, comportant 1 à 20 atomes autres que des atomes d'hydrogène ;
- $R^2$ représente un groupe hétéroaryle en $C_{6-20}$, doté d'une fonctionnalité de type base de Lewis ;

- M représente l'atome de métal du Groupe 4 ;
- X représente un groupe ligand anionique, neutre ou dianionique ;
- l'indice x est un nombre qui vaut de 0 à 5 et qui indique le nombre de tels groupes X présents ;
- et les traits pleins, les traits en pointillés et la flèche représentent respectivement des liaisons, des liaisons optionnelles et une liaison dative.

**6.** Procédé ou emploi conforme à la revendication 5, dans lequel

- T représente un groupe méthanediyle ou silanediyle portant un ou deux substituant(s) hydrocarbyle en $C_{1-20}$,
- $R^2$ représente un groupe pyridin-2-yle ou un groupe pyridin-2-yle à substituant(s),
- et M représente un atome de hafnium.

**7.** Procédé ou emploi conforme à la revendication 5 ou 6, dans lequel le complexe de métal est représenté par la formule (IIA) suivante :

(IIA)

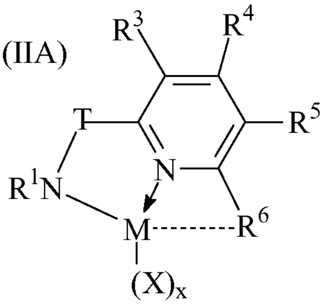

dans laquelle $R^3$, $R^4$, $R^5$ et $R^6$ représentent chacun un atome d'hydrogène ou d'halogène ou un groupe alkyle, cycloalkyle, hétéroalkyle, hétérocycloalkyle, aryle ou silyle, comportant jusqu'à 20 atomes sans compter les atomes d'hydrogène, ou des groupes représentés par des symboles $R^3$, $R^4$, $R^5$ ou $R^6$ adjacents peuvent être raccordés pour former des dérivés à cycles condensés.

**8.** Procédé ou emploi conforme à la revendication 7, dans lequel le complexe de métal est représenté par la formule (IIIA) suivante :

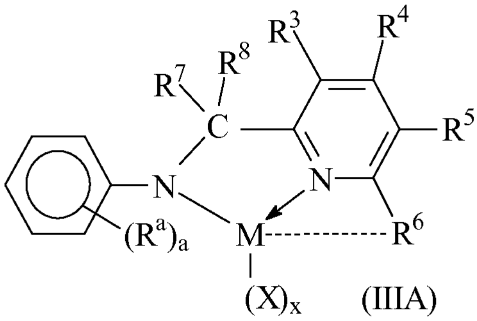

(IIIA)

dans laquelle

- $R^a$ représente, indépendamment en chaque occurrence, un groupe alkyle en $C_{1-4}$ ;
- l'indice a vaut de 1 à 5 ;
- et $R^7$ et $R^8$ représentent chacun, indépendamment, un atome d'hydrogène ou un groupe alkyle en $C_{1-20}$ ou aryle.

**9.** Procédé ou emploi conforme à la revendication 8, dans lequel :

- $R^3$, $R^4$ et $R^5$ représentent chacun un atome d'hydrogène ou un groupe alkyle en $C_{1-4}$ ;

- $R^6$ représente un groupe aryle en $C_{6-20}$ ;
- $R^a$ représente des groupes isopropyle ou tertiobutyle placés sur les deux positions ortho ;
- et l'un des symboles $R^7$ et $R^8$ représente un atome d'hydrogène et l'autre représente un groupe aryle en $C_{6-20}$.

**10.** Procédé ou emploi conforme à la revendication 9, dans lequel $R^6$ représente un groupe naphtyle.

**11.** Procédé ou emploi conforme à la revendication 9, dans lequel le complexe de métal est représenté par la formule (IVA) suivante :

(IVA)

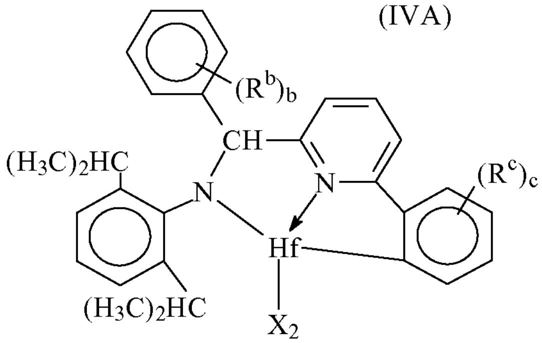

dans laquelle

- X représente en chaque occurrence un ligand halogénure, N,N-diméthylamido ou alkyle en $C_{1-4}$ ;
- $R^b$ représente, indépendamment en chaque occurrence, un groupe alkyle en $C_{1-20}$ ou aryle, ou deux groupes représentés par des symboles $R^b$ adjacents peuvent être raccordés pour former un cycle ;
- l'indice b vaut de 1 à 5 ;
- $R^c$ représente, indépendamment en chaque occurrence, un groupe alkyle en $C_{1-20}$ ou aryle en $C_{6-20}$, ou deux groupes représentés par des symboles $R^c$ adjacents peuvent être raccordés pour former un cycle ;
- et l'indice c vaut de 1 à 5.

**12.** Procédé ou emploi conforme à la revendication 11, dans lequel le complexe de métal est choisi parmi ceux qui sont représentés par les for-mules suivantes :

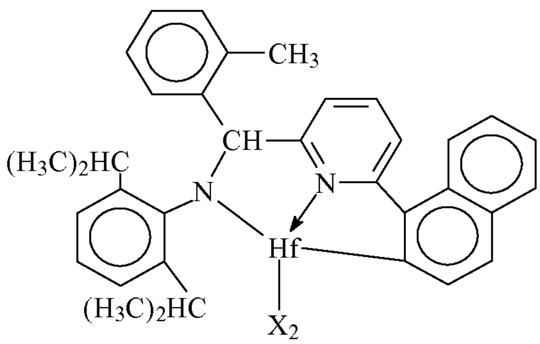

et

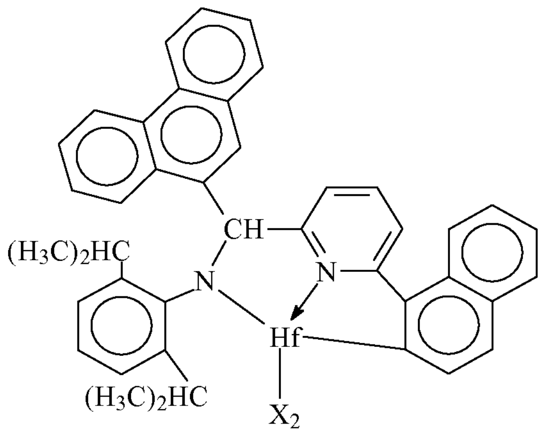

dans lesquelles X représente en chaque occurrence un ligand halogénure, N,N-diméthylamido ou alkyle en $C_{1-4}$.

**13.** Procédé ou emploi conforme à la revendication 11 ou 12, dans lequel X représente en chaque occurrence un ligand méthyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5312938 A
- US 5597935 A
- US 5861352 A
- US 5880302 A
- US 6020444 A
- US 6232256 A
- US 6320005 A
- US 6103657 A
- WO 0238628 A
- JP 2001011111 A
- US 4798081 A
- EP 277003 A
- US 5153157 A
- US 5064802 A
- US 5321106 A
- US 5721185 A
- US 5350723 A
- US 5425872 A
- US 5625087 A
- US 5883204 A
- US 5919983 A
- US 5783512 A
- WO 9915534 A
- WO 9942467 A
- EP 089691 A
- US 4543399 A
- WO 9425495 A
- US 5352749 A
- WO 9428032 A
- US 4588790 A
- US 5436304 A
- US 5405922 A
- US 5462999 A
- US 5461123 A
- US 5453471 A
- US 5032562 A
- US 5028670 A
- US 5473028 A
- US 5106804 A
- US 5556238 A
- US 5541270 A
- US 5608019 A
- US 5616661 A
- EP 0659773 A
- EP 0692500 A
- EP 0780404 A
- EP 0697420 A
- EP 0628343 A
- EP 0593083 A
- EP 0676421 A
- EP 0683176 A
- EP 0699212 A
- EP 0699213 A
- EP 0721798 A
- EP 0728150 A
- EP 0728151 A
- EP 0728771 A
- EP 0728772 A
- EP 0735058 A
- WO 9429032 A
- WO 9425497 A
- WO 9513305 A
- WO 9426793 A
- WO 9507942 A
- WO 9725355 A
- WO 9311171 A
- WO 9513306 A


### Non-patent literature cited in the description


- Periodic Table of the Elements herein shall refer to the Periodic Table of the Elements. CRC Press, Inc, 1999
- Determination of Short-Chain Branching Distributions of Ethylene copolymers by Automated Analytical Temperature Rising Elution Fractionation'' (Auto-ATREF. *J. of Appl Pol Sci: Applied Polymer Symposium,* 1990, vol. 45, 25-37